# EUROPEAN PATENT SPECIFICATION

(11) **EP 4 082 845 B1**
(45) Date of publication and mention of the grant of the patent: **04.06.2025**
(21) Application number: 22167591.1
(22) Date of filing: 11.04.2022
(51) Int. Cl.: B60T 7/12, B60T 8/17, B60T 17/22

(54) **BRAKE CONTROL DEVICE, BRAKE CONTROL METHOD, BRAKE CONTROL PROGRAM, AND INSUFFICIENT BRAKE RELEASE DETERMINATION DEVICE**
BREMSSTEUERVORRICHTUNG, BREMSSTEUERVERFAHREN, BREMSSTEUERPROGRAMM UND VORRICHTUNG ZUR BESTIMMUNG UNZUREICHENDER BREMSAUSLÖSUNG
DISPOSITIF DE COMMANDE DE FREIN, PROCÉDÉ DE COMMANDE DE FREIN, PROGRAMME DE COMMANDE DE FREIN ET DISPOSITIF DE DÉTERMINATION DE DESSERRAGE DE FREIN INSUFFISANT

(30) Priority: 26.04.2021 JP 2021074176
(43) Date of publication of application: 02.11.2022
(73) Proprietor: NABTESCO CORPORATION, Chiyoda-ku Tokyo 102-0093 (JP)
(72) Inventor: Tanaka, Yuya, Tokyo, 102-0093 (JP)
(74) Representative: Grünecker Patent- und Rechtsanwälte PartG mbB

(56) References cited:
- EP-A1- 2 151 363
- US-A- 4 347 569
- US-A- 5 209 551

## Description

### TECHNICAL FIELD

The present invention relates to a brake control device, a brake control method, a brake control program, and an insufficient brake release determination device.

### BACKGROUND

EP 2 151 363 A1 shows a railway vehicle equipped with an electric brake and a machine brake, wherein a transition between the electric brake and the machine brake is controlled.

Railway vehicles are equipped with a brake device that applies the brakes on the wheels. When the railway vehicle is traveling, the brake device is in a release state in which the brakes on the wheels are released. Patent Literature 1 describes a detection device for detecting insufficient release of the brakes of the brake device. This detection device detects the insufficient brake release of the brake device through temperature of the wheel while the railway vehicle is traveling.

### RELEVANT REFERENCES

### LIST OF RELEVANT PATENT LITERATURE

Patent Literature 1: Japanese Patent Application Publication No. 2014-040171

### SUMMARY

To detect the insufficient brake release by the brake device, the detection device of Patent Literature 1 requires the railway vehicle to be traveling while the brake device is in the insufficient release state. Therefore, it is desired to be able to determine the insufficient brake release by the brake device even when the railway vehicle is not traveling.

This object is achieved by a brake control device according to the features of claim 1, a brake control method according to claim 11, and a brake control program according to claim 12. According to one aspect disclosed herein, provided is a brake control device for applying a brake to a railway vehicle provided with a target member by pressing a frictional member against the target member. The brake control device includes: a detection unit detecting whether it is in a brake application state in which the frictional member is pressed against the target member; an acquiring unit acquiring a brake release command for releasing the pressing of the target member by the frictional member; and a determination unit determining whether the brake application state is maintained by using a detection result provided by the detection unit after the acquiring unit has acquired the brake release command.

In the above configuration, whether the brake is kept being applied is determined after the brake release command has been acquired. Therefore, unlike the prior arts in which the insufficient brake release cannot be determined unless the temperature of the wheels rise while the railway vehicle travels, it is possible to determine the insufficient brake release even when the railway vehicle is not running.

In the above brake control device, the detection unit may determine whether the brake application state is maintained based on a physical quantity. The physical quantity is at least one selected from the group consisting of: a force applied to the frictional member in the brake application state, a force applied to a transmission member in the brake application state, a displacement of the frictional member, and a displacement of the transmission member.

In the above brake control device, the determination unit may determine whether the brake application state is maintained based on a change in the physical quantity during a predetermined time period, the predetermined time period being the length of time from when the brake release command is acquired to when the brake is actually released in a normal state.

In the above brake control device, the determination unit may determine whether the brake application state is maintained by comparing the physical quantity with a previous physical quantity. The above brake control device further includes a control unit controlling driving of an electric actuator. The frictional member is driven by the electric actuator via the transmission member. When the determination unit determines that the brake application state is maintained, the control unit drives the electric actuator again in a direction in which the pressing by the frictional member is released.

In the above brake control device, when the determination unit determines that the brake application state is maintained, the control unit may once drive the electric actuator in a direction opposite to the direction in which the pressing by the frictional member is released, and then drive the electric actuator in the direction in which the pressing by the frictional member is released.

The above brake control device may include a control unit controlling an anti-skid valve. The frictional member is driven by a pressure supplied from a pressure source via a relay valve and the anti-skid valve. The control unit may drive the frictional member in a direction in which the pressing by the frictional member is released by exhausting through the anti-skid valve when the determination unit determines that the brake application state is maintained.

In the above brake control device, a plurality of the detection units may be provided on at least one of the frictional member or the transmission member, and each of the plurality of detection units detects a force applied to the at least one of the frictional material or the transmission member in the brake application state. The determination unit may predict a failure from a difference between physical quantities detected by the plurality of detection units.

In the above brake control device, the determination unit may predict a failure due to a malfunction based on an elapsed time from when the command acquiring unit acquires the brake release command to when the brake is actually released.

According to one aspect disclosed herein, provided is a brake control method for applying a brake to a railway vehicle provided with a target member by pressing a frictional member against the target member. The method includes: a detection step of detecting whether it is in a brake application state in which the frictional member is pressed against the target member; an acquiring step of acquiring a brake release command for releasing the pressing of the target member by the frictional member; and a determination step of determining whether the brake application state is maintained by using a detection result provided by the detection unit after the acquiring unit has acquired the brake release command.

In the above configuration, whether the brake is kept being applied is determined after the brake release command has been acquired. Therefore, unlike the prior arts in which the insufficient brake release cannot be determined unless the temperature of the wheels rise while the railway vehicle travels, it is possible to determine the insufficient brake release even when the railway vehicle is not running.

A brake control program for applying a brake to a railway vehicle provided with a target member by pressing a frictional member against the target member, the program causing a computer to perform: a detection step of detecting whether it is in a brake application state in which the frictional member is pressed against the target member; an acquiring step of acquiring a brake release command for releasing the pressing of the target member by the frictional member; and a determination step of determining whether the brake application state is maintained by using a detection result provided by the detection unit after the acquiring unit has acquired the brake release command.

According to the above program, whether the brake is kept being applied is determined after the brake release command has been acquired. Therefore, unlike the prior arts in which the insufficient brake release cannot be determined unless the temperature of the wheels rise while the railway vehicle travels, it is possible to determine the insufficient brake release even when the railway vehicle is not running.

An insufficient brake release determination device for determining insufficient brake release of a brake device that applies a brake to a railway vehicle provided with a target member by pressing a frictional member against the target member. The insufficient brake release determination device includes: a detection unit detecting whether it is in a brake application state in which the frictional member is pressed against the target member; a detection unit detecting whether it is in a brake application state in which the frictional member is pressed against the target member; a determination unit determining whether the brake application state is maintained by using a detection result provided by the detection unit after the acquiring unit has acquired the brake release command.

In the above configuration, whether the brake is kept being applied is determined after the brake release command has been acquired. Therefore, unlike the prior arts in which the insufficient brake release cannot be determined unless the temperature of the wheels rise while the railway vehicle travels, it is possible to determine the insufficient brake release even when the railway vehicle is not running.

### ADVANTAGEOUS EFFECTS

According to the aspects of the inventions, it is possible to determine the insufficient brake release even when the railway vehicle is not running.

### BRIEF DESCRIPTION OF THE DRAWINGS

Fig. 1 is a schematic view showing the configuration of a brake device relating to a first embodiment.
Fig. 2 is a flowchart showing a brake application state detection process of the brake control device relating to the first embodiment.
Fig. 3 is a flowchart showing an insufficient brake release determination process of the brake control device relating to the first embodiment.
Fig. 4 is a schematic view showing the configuration of a brake device relating to a second embodiment.
Fig. 5 is a schematic view showing the configuration of a brake device relating to a third embodiment.
Fig. 6 is a flowchart showing a failure prediction process of a brake control device relating to a fourth embodiment.

### DESCRIPTION OF THE EMBODIMENTS

### First Embodiment

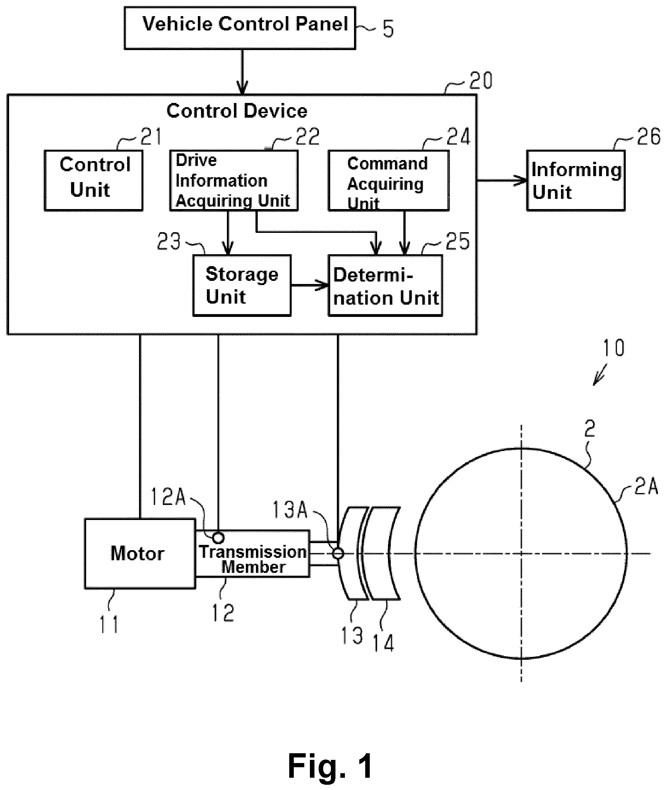

With reference to Figs. 1 to 3, a first embodiment of a brake device equipped with a brake control device and an insufficient brake release determination device will be described. The brake device is provided in railway vehicles.

As shown in Fig. 1, the brake device 10 is a tread brake for pressing a brake shoe 14 against the tread surface 2a of a wheel 2 of a railway vehicle, so that a braking force is generated. The brake device 10 includes a rotating motor 11 and is driven by the motor 11. The brake device 10 includes a transmission member 12 and a brake shoe retainer 13. The transmission member 12 is configured to transmit the driving force of the motor 11 to the brake shoe 14. The transmission member 12 uses the driving force from the motor 11 to move the brake shoe retainer 13 in the radial direction of the wheel 2. The brake shoe 14 is attached onto the brake shoe retainer 13. The brake shoe 14 is moved as the brake shoe retainer 13 is moves, so that the brake shoe 14 is pressed against the tread surface 2A of the wheel 2. As pressed against the tread surface 2A of the wheel 2, the brake shoe 14 wars out. As a result, the brake shoe 14 becomes thinner. Here, the motor 11 is equivalent to an electric actuator. The wheel 2 is equivalent to a target member, and the brake shoe 14 is equivalent to the frictional member.

The brake device 10 is controlled by a control device 20. The control device 20 may be formed of one or more processors that perform various processes in accordance with computer programs (software). The processes to be executed by the control device 20 or processors include a brake control method. The brake control method includes a brake application state detection process and an inflexibility determination process, which will be described later. The control device 20 may be formed of one or more dedicated hardware circuits such as application-specific integrated circuits (ASICs) that perform at least a part of the various processes, or it may be formed of circuitry including a combination of such circuits. The processors include a CPU and a memory such as a RAM or ROM. The memory stores program codes or instructions configured to cause the CPU to perform processes. The memory, or a computer-readable medium, encompasses any kind of available media accessible via a general-purpose or dedicated computer. The programs stored in the computer-readable storage medium include a brake control program. The brake control program causes the computer to execute a detection step, an acquisition step, and a determination step. The control device 20 corresponds to the brake control device and the insufficient brake release determination device.

The control device 20 controls the braking force based on a brake command from a vehicle control panel 5. The control device 20 includes a control unit 21 for controlling the brake device 10. The control unit 21 drives and controls the motor 11 according to a required braking force. The control unit 21 performs a control such that the brake shoe 14 moves from a position where it contacts the tread surface 2A of the wheel 2 to a position where it is at a predetermined distance from the tread surface 2A. With this control, the time until braking is initiated by bringing the brake shoe 14 into contact with the tread 2A of the wheel 2 can be made constant. A stress sensor 12A is provided in the transmission member 12. The stress sensor 12A is, for example, a strain gage that measures a force applied to the transmission member 12 and provides measurement information to the control device 20. Thus, the control device 20 is able to obtain information about the force applied to the transmission member 12 in the brake application state. Similarly, a stress sensor 13A is provided in the brake shoe retainer 13. The stress sensor 13A is, for example, a strain gage that measures a force applied to the brake shoe retainer 13 and provides measurement information to the control device 20. Thus, the control device 20 is able to obtain information about the force applied to the brake shoe 14 in the brake application state. Since the stress is almost zero when the brake is released, a threshold value may be set and the release of the brake may be detected when the acquired force falls below the threshold value. A stress sensor may be provided on the brake shoe 14 to measure the force applied to the brake shoe 14 when the brake is applied.

The control device 20 includes a drive information acquiring unit 22, a storage unit 23, and a command acquiring unit 2 as an acquiring unit, 4 and a determination unit 25. The drive information acquiring unit 22 obtains drive information of the motor 11. The drive information acquiring unit 22 calculates displacements of the transmission member 12 and the brake shoe 14 based on at least one of the product of the duration and the current of the motor 11 (i.e., the product of the value of the current flowing through the motor 11 and the period of time during which the current flows through the motor 11) or the rotation speed of the motor 11. The driving information acquiring unit 22 is configured to acquire measurement information provided by the stress sensors 12A and 13A. The drive information acquiring unit 22 calculates the force applied to the transmission member 12 in the brake application state from the measurement information provided by the stress sensor 12A. The drive information acquiring unit 22 also calculates the force applied to the brake shoe 14 in the brake application state from the measurement information provided by the stress sensor 13A.

The drive information acquiring unit 22 detects whether it is in the brake application state in which the brake shoe 14 is pressed against the tread surface 2A of the wheel 2. In other words, the drive information acquiring unit 22 detects whether the brake is applied through a physical quantity(ies). The physical quantity may be at least one selected from the group consisting of: the force applied to the brake shoe 14 in the brake application state, the force applied to the transmission member 12 in the brake application state, the displacement of the brake shoe 14, and the displacement of the transmission member 12. In the storage unit 23, the displacement of the transmission member 12, the displacement of the brake shoe 14, the force applied to the transmission member 12, and the force applied to the brake shoe 14 are stored. The command acquiring unit 24 obtains, from the vehicle control panel 5, a release command for releasing the press against the tread surface 2A of the wheel 2 by the brake shoe 14. The drive information acquiring unit 22 corresponds to a detection unit that detects whether it is in the brake application state.

After the command acquiring unit 24 has acquired the brake release command, the determination unit 25 uses a detection result of the drive information acquiring unit 22 to determine whether the application of the brake is maintained or not. The determination unit 25 obtains a change in the physical quantity during a predetermined period of time, which is the length of time of the normal state from when the brake release command is obtained to when the brake is actually released. The determination unit 25 determines whether the application of the brake is maintained based on the obtained change in the physical quantity. The change(s) in the physical quantity(ies) during the predetermined time period in the normal state is stored in the storage unit 23. When the obtained change in the physical quantity during the predetermined time period is same as the change in the physical quantity during the predetermined time period in the normal state stored in the storage unit 23, the determination unit 25 determines that the application of the brake is not maintained since the brake is released. Alternatively, the determination unit 25 acquires the physical quantity and determines whether the application of the brake is maintained by comparing a currently acquired value of the physical quantity with a previously acquired value of the physical quantity. The values of the physical quantity obtained in the past are stored in the storage unit 23. When the acquired physical quantity matches a previous physical quantity obtained at the time of the brake release and stored in the storage unit, the determination unit 25 determines that the application of the brake is not maintained since the brake is released. The determination unit 25 may determine whether the application of the brake is maintained based on at least one of the change in the physical quantity during the predetermined time period in the normal state or the previous physical quantity.

When the determination unit 25 determines that the brake application is maintained, the control unit 21 drives the motor 11 again in the direction in which the pressing by the brake shoe 14 is released. By retrying in this way, the possibility of the brake release can be increased. Alternatively, when the determination unit 25 determines that the brake application is maintained, the control unit 21 once drives the motor 11 in a direction opposite to the direction in which the pressing by the brake shoe 14 is released, and then drives the motor 11 in the direction in which the pressing by the brake shoe 14 is released. When there is sticking or jam in the transmission member 12, driving the brake shoe 14 in the direction opposite to the direction in which the brake shoe is detached may eliminate the sticking or jam. Therefore, when the transmission member 12 is jammed and the brake shoe 14 does not operate, it is possible to increase the possibility that the jam is released and pressing by the brake shoe 14 is released.

The brake device 10 includes the informing unit 26. The informing unit 26 informs the insufficient brake release when the release of the brake becomes insufficient at the time when the brake is supposed to be completely released. The informing unit 26 may be a speaker that emits sound, an alert lamp that lights, a display, and the like. It is preferable that the informing unit 26 is provided on the vehicle control panel 5 to allow the driver to easily notice the informing unit. Alternatively, it is preferable that the informing unit 26 is installed near the brake device 10 to allow an operator to notice it at the time of start-up inspection, work inspection, or the like.

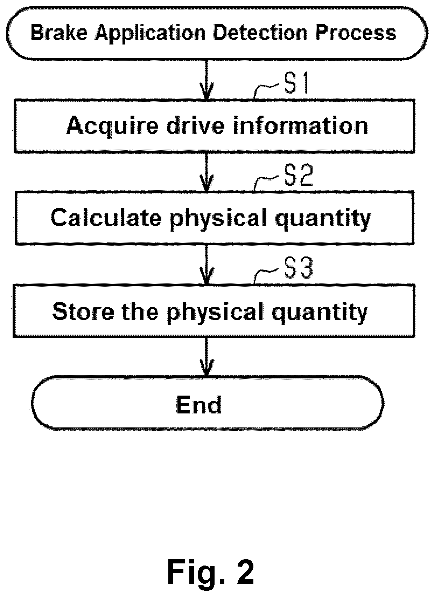

The following now describes the steps of the brake application state detection process performed by the control device 20, with reference to Fig. 2. Fig. 2 illustrates a process for the brake device 10 to detect the brake application state when the brake device 10 is activated. The brake device 10 stores the processing.

The control device 20 first acquires the drive information (step S1). That is, the drive information acquiring unit 22 acquires at least one of the current value of the motor 11 or the rotation speed of the motor 11. Further, the drive information acquiring unit 22 acquires the measurement information of the stress sensors 12A and 13A.

Subsequently, the control device 20 calculates one or more physical quantities (step S2). Specifically, the drive information acquiring unit 22 calculates the displacements of the transmission member 12 and the brake shoe 14 based on at least one of the product of the duration and the current of the motor 11 or the rotation speed of the motor 11. The drive information acquiring unit 22 calculates the force applied to the transmission member 12 in the brake application state from the measurement information provided by the stress sensor 12A. The drive information acquiring unit 22 also calculates the force applied to the brake shoe 14 in the brake application state from the measurement information provided by the stress sensor 13A.

Subsequently, the control device 20 stores the one or more physical quantities (step S3) and ends the process. That is, the drive information acquiring unit 22 stores, in the storage unit 23, the displacements and the forces applied in the brake application state. Once the drive information acquiring unit 22 acquires the brake release command, the drive information acquiring unit 22 acquires the change(s) in the one or more physical quantities in the predetermined time period and stores them in the storage unit 23.

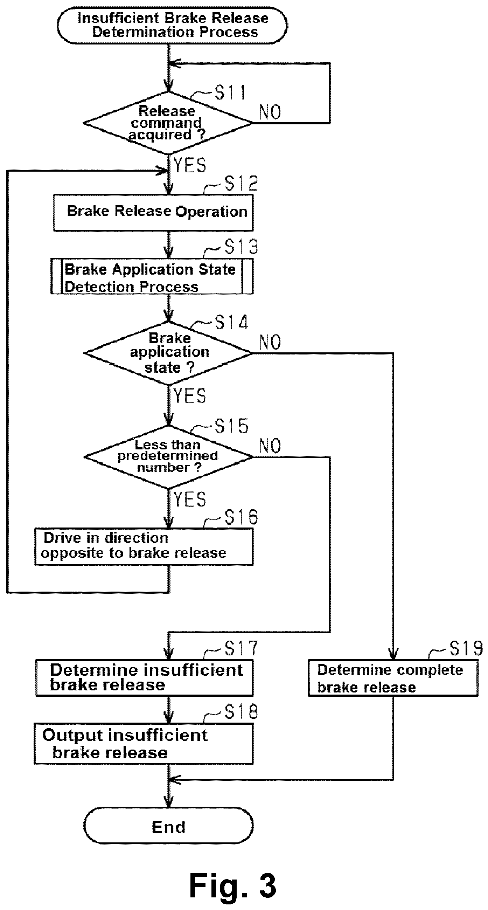

The following now describes the steps of the insufficient brake release determination process performed by the control device 20, with reference to Fig. 3. Fig. 3 shows the process of determining whether the release of the brake is insufficient when the brake release command is acquired from the vehicle control panel 5.

The control device 20 first determines whether the brake release command is acquired when the railroad vehicle is stopped (step S11). Specifically, the control unit 21 determines whether the command acquiring unit 24 has acquired the brake release command from the vehicle control panel 5. When the control unit 21 determines that the brake release command has not been acquired (step S11: NO), the control unit 21 waits until the brake release command is acquired.

Whereas when it is determined that the brake release command has been acquired (step S11: YES), the control unit 21 performs a release operation to release the brake (step S12). That is, the control unit 21 drives and controls the motor 11 to move the brake shoe 14 in the direction away from the tread surface 2A of the wheel 2. Step S12 corresponds to the acquisition step.

Subsequently, the control device 20 performs the brake application state detection process described above (step S13). That is, the drive information acquiring unit 22 acquires a change(s) in the physical quantity(ies) during the predetermined time period starting from the receipt of the brake release command or the physical quantity(ies) after the elapse of the predetermined time period. Step S13 corresponds to the detection step.

Subsequently, the control unit 20 determines whether the brake is being applied (step S24). Specifically, the determination unit 25 determines whether the application of the brake is maintained based on the change in the physical quantity during the predetermined time period starting from the receipt of the brake release command. When the obtained change in the physical quantity is same as the change in the physical quantity of the normal state stored in the storage unit 23, the determination unit 25 determines that the application of the brake is not maintained since the brake is released. Alternatively, the determination unit 25 determines whether the application of the brake is maintained by comparing the currently acquired value of the physical quantity with a previously acquired value of the physical quantity. When the acquired physical quantity matches the previous physical quantity that has been obtained at the time of the brake release and stored in the storage unit, the determination unit 25 determines that the application of the brake is not maintained since the brake is released. The determination unit 25 determines that the brake is not applied (step S14: NO), and determines that the brake is "released" (step S19), and ends the process. Step S14 corresponds to the determination step.

Whereas when the acquired change in the physical quantity does not match the change in the physical quantity of the normal state, the determination unit 25 determines that the application of the brake is maintained because the brake has not been released. Alternatively, when the currently acquired value of the physical quantity does not match the previous value of the physical quantity, the determination unit 25 determines that the application of the brake is maintained because the brake has not been released. When the determination unit 25 determines that the brake is applied (step S14: YES), the determination unit 25 determines whether the number of determinations performed is less than a predetermined number (step S15). That is, the control unit 21 retries the release operation until the number of times it is determined that the application of the brake is maintained reaches the predetermined number of times. When it is determined that the number of times it is determined that the application of the brake is maintained is less than the predetermined number of times (step S15: YES), the control unit 21 drives the motor 11 in the direction opposite to that of the brake release operation (step S16). The process then proceeds to step S12. That is, by driving the motor 11 in the direction opposite to that of the brake release operation, the control unit 21 increases the possibility that the transmission member 12 and the brake shoe 14 are released from the state of being jammed due to foreign matters, or the like. The control unit 21 retries the brake release operation in step S12.

Whereas when the control unit 21 determines that the number of determinations performed is equal to or greater than the predetermined number (step S15: NO), the control unit 21 determines that the release of the brake is insufficient (step S17), and outputs the "insufficient brake release" (step S18). That is, the control unit 21 gives up the retry and processes as the "insufficient brake release" because the application of the brake is maintained even after the motor 11 is driven in the direction opposite to that of the brake release operation and the brake release operation is performed at the predetermined number of times. Subsequently, the control unit 21 informs the "insufficient brake release" by the informing unit 26. In this way, it is possible to determine the insufficient brake release even when the railway vehicle is not traveling. In addition, the vehicle control panel 5 may prevent the start of the railway vehicle.

Advantageous effects of the first embodiment will be now described.
(1-1) After the command acquiring unit 24 has acquired the brake release command, it is determined whether the application of the brake is maintained based on the detection result of the drive information acquiring unit 22. Therefore, unlike the prior arts in which the insufficient brake release cannot be determined unless the temperature of the wheels rise while the railway vehicle travels, the invention makes it possible to determine the insufficient brake release even when the railway vehicle is not running.
(1-2) The physical quantity(ies) changes once the brake release command is acquired. By detecting whether the vehicle is in the brake applied state based on the physical quantity, the detection accuracy can be improved.
(1-3) It takes a predetermined time from the reception of the brake release command to the actual brake release in the normal state. By determining whether the application of the brake is maintained based on a change in the physical quantity during the predetermined time, the determination accuracy can be further improved.
(1-4) The determination accuracy can be improved by performing the determination whether the brake application is maintained by comparing the acquired physical quantity with a previous physical quantity.
(1-5) By driving the motor 11 again when it is determined that the application of the brake by the brake device 10 is maintained, the possibility of the brake release can be increased.
(1-6) When there is sticking or jam in the transmission member 12, driving the brake shoe 14 in the direction opposite to the direction in which the brake shoe is detached may eliminate the sticking or jam. This can increase the possibility of the brake release.

### Second Embodiment

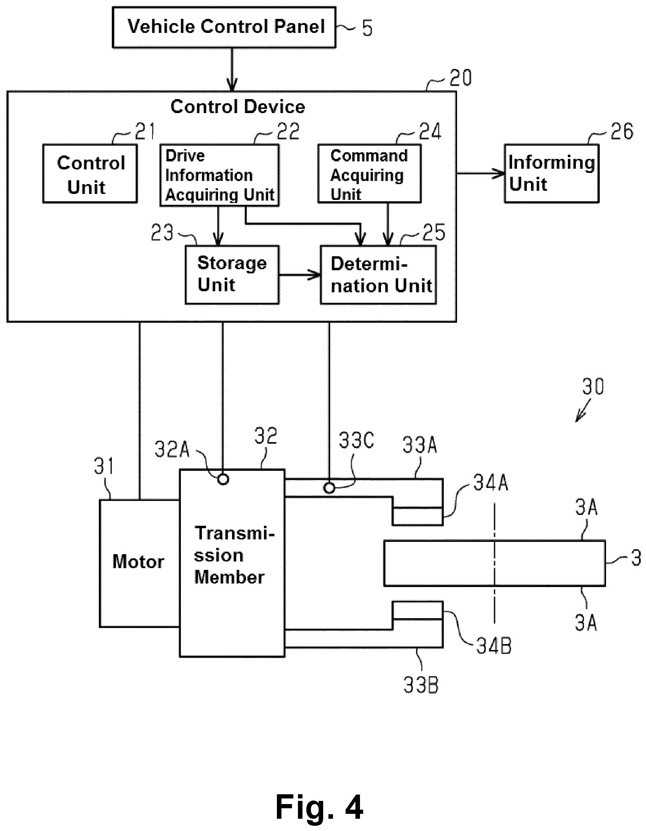

With reference to Fig. 4, the second embodiment of the brake device equipped with the brake control device and the insufficient brake release determination device will be described. The second embodiment is different from the first embodiment in that the brake device is a disc brake device. The following description will be focused on the differences from the first embodiment.

As shown in Fig. 4, a brake device 30 is a disc brake for generating a braking force by pressing brake pads 34A and 34B against a disc 3 integrally rotating with the wheel 2 of the railway vehicle. The brake device 30 includes a rotating motor 31 and is driven by the motor 31. The brake device 30 includes a transmission member 32 for transmitting the driving force of the motor 31 and also includes a left arm 33A and right arm 33B. The transmission member 32 uses the driving force from the motor 31 to move the left and right arms 33A and 33B. The brake pad 34A is attached to the left arm 33A, and the brake pad 34B is attached to the right arm 33B. The left and right arms 33A and 33B are vertically moved by the transmission member 32 toward the side surface 3A of the disc 3. The brake pads 34A and 34B are displaced with the left and right arms 33A and 33B, so that the brake pads 34A and 34B are pressed against the side surface 3A of the disc 3. As pressed against the side surface 3A of the disc 3, the brake pads 34A and 34B wear out. As a result, the brake pads 34A and 34B become thinner. Here, the motor 31 is equivalent to an electric actuator. The disc 3 is a rotatable member and equivalent to a target member, and the brake pads 34A and 34B are equivalent to the frictional member. The wheel 2 may be used as the frictional member instead of the disc 3.

The brake device 30 is controlled by a controller device 20, which is configured in the same manner as in the first embodiment. The control device 20 controls the braking force based on a braking command from a vehicle control panel 5. The control device 20 includes a control unit 21 for controlling the brake device 30. The control unit 21 drives and controls the motor 31 according to a required braking force. When releasing the brake, the control unit 21 controls the motor 31 such that the brake pads 34A and 34B can move a predetermined distance from the position where they contact the side surface 3A of the disc 3. In this way, after the brake pads 34A and 34B are brought into contact with the side surface 3A of the disc 3, the braking starts working after the same period of time. A stress sensor 32A is provided in the transmission member 32. The stress sensor 32A is, for example, a strain gage that measures a force applied to the transmission member 32 and provides measurement information to the control device 20. Thus, the control device 20 is able to obtain information about the force applied to the transmission member 32 in the brake application state. Similarly, the left arm 33A is provided with a stress sensor 33C. The stress sensor 33C is, for example, a strain gage that measures a force applied to the left arm 33A and provides measurement information to the control device 20. Thus, the control device 20 is able to obtain information about the force applied to the brake pads 33A and 34B in the brake application state. Since the stress is almost zero when the brake is released, a threshold value may be set and the release of the brake may be detected when the acquired force falls below the threshold value. Stress sensors may be provided on the brake pads 33A and 34B to measure the forces applied to the brake pads 33A and 34B when the brake is applied.

The control device 20 includes the drive information acquiring unit 22, the storage unit 23, and the command acquiring unit 24, and the determination unit 25. The drive information acquiring unit 22 obtains drive information of the motor 31. The drive information acquiring unit 22 calculates the displacements of the transmission member 32 and the brake pads 34A and 34B based on at least one of the product of the duration and the current of the motor 31 or the rotation speed of the motor 31. Further, the drive information acquiring unit 22 acquires the measurement information of the stress sensors 32A and 33C. The drive information acquiring unit 22 calculates the force applied to the transmission member 32 in the brake application state from the measurement information provided by the stress sensor 32A. The drive information acquiring unit 22 also calculates the forces applied to the brake pads 34A and 34B in the brake application state from the measurement information provided by the stress sensor 33C.

The drive information acquiring unit 22 detects whether it is in the brake application state where the brake pads 34A and 34B are pressed against the tread surfaces 3A of the disc 3. In other words, the drive information acquiring unit 22 detects whether the brake is applied through a physical quantity. The physical quantity may be at least one selected from the group consisting of: the forces applied to the brake pads 34A and 34B in the brake application state, the force applied to the transmission member 32 in the brake application state, the displacements of the brake pads 34A and 34B, and the displacement of the transmission member 32. In the storage unit 23, the displacement of the transmission member 32, the displacements of the brake pads 34A and 34B, the force applied to the transmission member 32, and the forces applied to the brake pads 34A and 34B are stored. The command acquiring unit 24 obtains, from the vehicle control panel 5, a brake release command for releasing the press against the tread surfaces 3A of the disc 3 by the brake pads 34A and 34B. The drive information acquiring unit 22 corresponds to a detection unit that detects whether the brake is applied.

After the command acquiring unit 24 obtains the brake release command, the determination unit 25 uses a detection result of the drive information acquiring unit 22 to determine whether the application of the brake is maintained or not. The determination unit 25 obtains a change in the physical quantity during a predetermined period of time, which is the length of time of the normal state from when the brake release command is obtained to when the brake is actually released. The determination unit 25 determines whether the application of the brake is maintained based on the obtained change in the physical quantity. The change in the physical quantity in the predetermined period of time in the normal state is stored in the storage unit 23. When the obtained change in the physical quantity in the predetermined period of time is same as the change in the physical quantity at the predetermined period of time in the normal state stored in the memory section 23, the determination unit 25 determines that the application of the brake is not maintained since the brake is released. Alternatively, the determination unit 25 acquires the physical quantity and determines whether the application of the brake is maintained by comparing a currently acquired value of the physical quantity with a previously acquired value of the physical quantity. The values of the physical quantity obtained in the past are stored in the storage unit 23. When the acquired physical quantity matches a previous physical quantity obtained at the time of the brake release and stored in the storage unit, the determination unit 25 determines that the application of the brake is not maintained since the brake is released. The determination unit 25 may determine whether the brake application state is maintained based on at least one of the change in the physical quantity during the predetermined time period in the normal state or the previous physical quantity. When the determination unit 25 determines that the brake application is maintained, the control unit 21 drives the motor 31 again in the direction of detaching the brake pads 34A and 34B. By retrying in this way, the possibility of the brake release can be increased. Alternatively, when the determination unit 25 determines that the brake application is maintained, the control unit 21 once drives the motor 31 in a direction opposite to the direction in which the pressing by the brake pads 34A and 34B are released, and then drives the motor 31 in the direction in which the pressing by the brake pads 34A and 34B are released. When there is sticking or jam in the transmission member 32, driving the brake pads 34A and 34B in the direction opposite to the direction in which the pressing by the brake pads 34A and 34B are released may eliminate the sticking or jam. Therefore, when the transmission member 32 is jammed and the brake pads 34A and 34B do not operate, it is possible to increase the possibility that the jam is released and pressing by the brake pads 34A and 34B are released.

When the determination unit 25 determines that the brake application is maintained, the control unit 21 drives the motor 31 again in the direction of detaching the brake pads 34A and 34B. By retrying in this way, the possibility of the brake release can be increased. Alternatively, when the determination unit 25 determines that the brake application is maintained, the control unit 21 once drives the motor 31 in a direction opposite to the direction in which the pressing by the brake pads 34A and 34B are released, and then drives the motor 31 in the direction in which the pressing by the brake pads 34A and 34B are released. When there is sticking or jam in the transmission member 32, driving the brake pads 34A and 34B in the direction opposite to the direction in which the pressing by the brake pads 34A and 34B are released may eliminate the sticking or jam. Therefore, when the transmission member 32 is jammed and the brake pads 34A and 34B do not operate, it is possible to increase the possibility that the jam is released and pressing by the brake pads 34A and 34B are released.

The brake device 30 includes the informing unit 26. The informing unit 26 informs the insufficient brake release when the release of the brake becomes insufficient at the time when the brake is supposed to be completely released. The informing unit 26 may be a speaker that emits sound, an alert lamp that lights, a display, and the like. It is preferable that the informing unit 26 is provided on the vehicle control panel 5 to allow the driver to easily notice the informing unit. Alternatively, it is preferable that the informing unit 26 is installed near the brake device 30 to allow an operator to notice it at the time of start-up inspection, work inspection, or the like.

The following now describes the steps of the brake application state detection process performed by the control device 20, with reference to Fig. 2. Fig. 2 illustrates a process for the brake device 30 to detect the brake application state when the brake device 30 is activated. The brake device 30 stores the processing.

The control device 20 first acquires the drive information (step S1). That is, the drive information acquiring unit 22 acquires at least one of the current value of the motor 31 or the number of rotations of the motor 31. Further, the drive information acquiring unit 22 acquires the measurement information of the stress sensors 32A and 33C.

Subsequently, the control device 20 calculates one or more physical quantities (step S2). Specifically, the drive information acquiring unit 22 calculates the displacements of the transmission member 32 and the brake pads 34A and 34B based on at least one of the product of the duration and the current of the motor 31 or the rotation speed of the motor 31. The drive information acquiring unit 22 calculates the force applied to the transmission member 32 in the brake application state from the measurement information provided by the stress sensor 32A. The drive information acquiring unit 22 also calculates the forces applied to the brake pads 34A and 34B in the brake application state from the measurement information provided by the stress sensor 33C.

Subsequently, the control device 20 stores the one or more physical quantities (step S3) and ends the process. That is, the drive information acquiring unit 22 stores, in the storage unit 23, the displacements and the forces applied in the brake application state. Once the drive information acquiring unit 22 acquires the brake release command, the drive information acquiring unit 22 acquires the change(s) in the one or more physical quantities in the predetermined time period and stores them in the storage unit 23.

The following now describes the steps of the insufficient brake release determination process performed by the control device 20, with reference to Fig. 3. Fig. 3 shows the process of determining whether the release of the brake is insufficient when the brake release command is acquired from the vehicle control panel 5.

The control device 20 first determines whether the brake release command is acquired when the railroad vehicle is stopped (step S11). Specifically, the control unit 21 determines whether the command acquiring unit 24 has acquired the brake release command from the vehicle control panel 5. When the control unit 21 determines that the brake release command has not been acquired (step S11: NO), the control unit 21 waits until the brake release command is acquired.

Whereas when it is determined that the brake release command has been acquired (step S11: YES), the control unit 21 performs a brake release operation to release the brake (step S12). More specifically, the control unit 21 controls the driving of the motor 31 to move the brake pads 34A and 34B away from the side surfaces 3A of the disc 3. Step S12 corresponds to the acquisition step.

Subsequently, the control device 20 performs the brake application state detection process described above (step S13). That is, the drive information acquiring unit 22 acquires a change(s) in the physical quantity(ies) during the predetermined time period starting from the receipt of the brake release command or the physical quantity(ies) after the elapse of the predetermined time period. Step S13 corresponds to the detection step.

Subsequently, the control unit 20 determines whether the brake is being applied (step S24). Specifically, the determination unit 25 determines whether the application of the brake is maintained based on the change in the physical quantity during the predetermined time period starting from the receipt of the brake release command. When the obtained change in the physical quantity is same as the change in the physical quantity of the normal state stored in the storage unit 23, the determination unit 25 determines that the application of the brake is not maintained since the brake is released. Alternatively, the determination unit 25 determines whether the application of the brake is maintained by comparing the currently acquired value of the physical quantity with a previously acquired value of the physical quantity. When the acquired physical quantity matches a previous physical quantity obtained at the time of the brake release and stored in the storage unit, the determination unit 25 determines that the application of the brake is not maintained since the brake is released. The determination unit 25 determines that the brake is not applied (step S14: NO), and determines that the brake is "released" (step S19), and ends the process. Step S14 corresponds to the determination step.

Whereas when the acquired change in the physical quantity does not match the change in the physical quantity of the normal state, the determination unit 25 determines that the application of the brake is maintained because the brake has not been released. Alternatively, when the acquired value of the physical quantity does not match the previous value of the physical quantity, the determination unit 25 determines that the application of the brake is maintained because the brake has not been released. When the determination unit 25 determines that the brake is applied (step S14: YES), the determination unit 25 determines whether the number of determinations performed is less than a predetermined number (step S15). That is, the control unit 21 retries the release operation until the number of times it is determined that the application of the brake is maintained reaches the predetermined number of times. When it is determined that the number of times it is determined that the application of the brake is maintained is less than the predetermined number of times (step S15: YES), the control unit 21 drives the motor 31 in the direction opposite to that of the brake release operation (step S16). The process then proceeds to step S12. That is, by driving the motor 31 in the direction opposite to that of the brake release operation, the control unit 21 increases the possibility that the transmission member 32 and the brake pads 34A and 34B are released from the state of being jammed due to foreign matters, or the like. The control unit 21 retries the brake release operation in step S12.

Whereas when the control unit 21 determines that the number of determinations performed is equal to or greater than the predetermined number (step S15: NO), the control unit 21 determines that the release of the brake is insufficient (step S17), and outputs the "insufficient brake release" (step S18). That is, the control unit 21 gives up the retry and processes as the "insufficient brake release" because the application of the brake is maintained even after the motor 31 is driven in the direction opposite to that of the brake release operation and the brake release operation is performed at the predetermined number of times. Subsequently, the control unit 21 informs the "insufficient brake release" by the informing unit 26. In this way, it is possible to determine the insufficient brake release even when the railway vehicle is not traveling. In addition, the vehicle control panel 5 may prevent the start of the railway vehicle.

Advantageous effects of the second embodiment will be now described. The following advantageous effects are obtained in addition to the advantageous effects (1-1) to (1-4) of the first embodiment.
(2-5) By driving the motor 31 again when it is determined that the application of the brake by the brake device 30 is maintained, the possibility of the brake release can be increased.
(2-6) When there is sticking or jam in the transmission member 32, driving the brake pads 34A and 34B in the direction opposite to the direction in which the pressing by the brake pads 34A and 34B are released may eliminate the sticking or jam. This can increase the possibility of the brake release.

### Third Embodiment

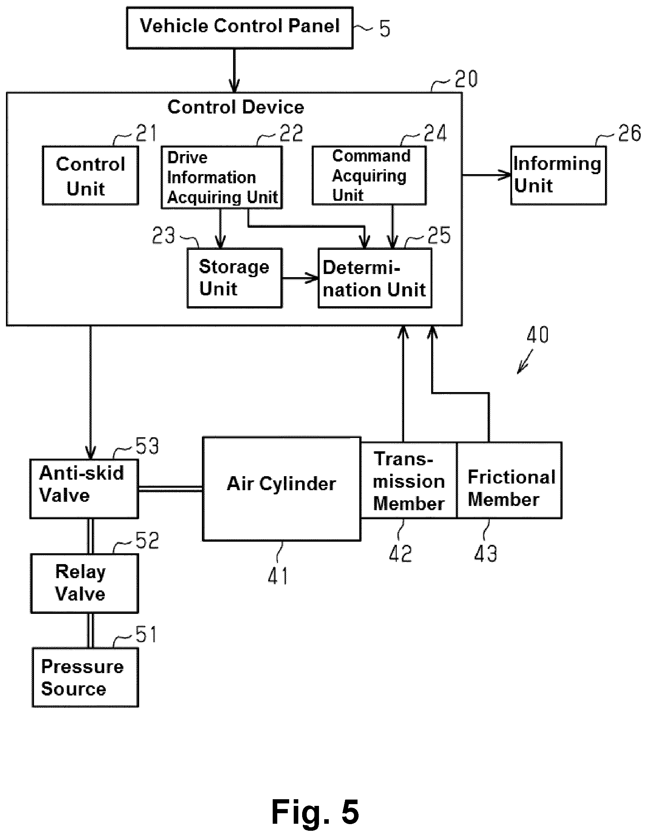

With reference to Fig. 5, the third embodiment of the brake device equipped with the brake control device and the insufficient brake release determination device will be described. The third embodiment is different from the first embodiment in that the drive source is compressed air. The following description will be focused on the differences from the first embodiment.

As shown in Fig. 5, in the brake device 40, compressed air is supplied from a pressure source 51 to an air cylinder 41 via a relay valve 52 and an anti-skid valve 53. The anti-skid valve 53 is a valve for exhausting the compressed air supplied to the air cylinder 41 when the wheels skid relative to the track. The brake device 40 may be a tread brake device or a disc brake device. When the compressed air is supplied, the air cylinder 41 drives the frictional member 43 in the brake application direction via the transmission member 42. Once the compressed air is exhausted, the air cylinder 41 drives the frictional member 43 via the transmission member 42 in a direction of the brake release which is opposite to the brake application direction.

A stress sensor (not shown) is provided on the transmission member 42 and the frictional member 43, and the forces applied to the transmission member 42 and the frictional member 43 are outputted to the control device 20. In the control device 20, the determination unit 25 performs the insufficient brake release determination process as in the first embodiment and the second embodiment. When the determination unit 25 determines that the application of the brake is maintained and the brake release is insufficient through the determination process, the control unit 21 causes the anti-skid valve 53 to exhaust the air. When the air is exhausted from the anti-skid valve 53, the frictional member 43 is driven in the brake release direction via the air cylinder 41 and the transmission member 42.

Advantageous effects of the third embodiment will be now described. The following advantageous effects are obtained in addition to the advantageous effects (1-1) to (1-4) of the first embodiment.

(3-1) By exhausting the compressed air through the anti-skid valve 53 to drive the frictional member 43 in a direction to release the brake, the possibility of the complete brake release can be increased even when a malfunction of the relay valve 52 occurs.

### Fourth Embodiment

With reference to Fig. 1, the fourth embodiment of the brake device equipped with the brake control device will now be described. The fourth embodiment is different from the first to third embodiment in that a failure prediction process is performed. The following description will be focused on the differences from the first embodiment. Although the brake device 10 will be hereunder described as the fourth embodiment, the brake devices 30 and 40 may be used instead.

Since it is desirable that the railway vehicle does not travel while the insufficient brake release by the brake device 10 occurs, failure prediction of the brake device 10 is desired. To realize this, the determination unit 25 of the brake device 10 predicts a failure from a difference between physical quantities acquired by the drive information acquiring unit 22. The physical quantities are a force applied to the brake shoe 14 in the brake application state measured by the stress sensor 13A of the brake shoe retainer 13, and a force applied to the transmission member 12 in the brake application state measured by the stress sensor 12A of the transmission member 12. The drive information acquiring unit 22 that acquires detection result from the stress sensors 12A and 13A corresponds to the detection unit. Two or more stress sensors may be provided in the transmission member 12, or two or more stress sensors may be provided in at least one of the brake shoe retainer 13 or the brake shoe 14.

Since these physical quantities are the same, the determination unit 25 compares two or more physical quantities. When there is a difference between the physical quantities, it is determined that a failure is predicted. Further, the determination unit 25 predicts a failure due to a malfunction based on the elapsed time from when the command acquiring unit 24 acquires the brake release command to when the brake is actually released. When the brake works normally, the elapsed time will be the same every time. Whereas if there is a malfunction, the elapsed time will be longer. The elapsed time becomes longer if parts movement becomes dull due to deterioration over time. Therefore, the determination unit 25 determines that a failure is predicted due to a malfunction when the elapsed time is different from the previous elapsed time. "A failure is predicted" means a state in which there is no failure but the possibility of failure is increasing. The determination unit 25 may determine that a failure is predicted based on at least one of two or more physical quantities or the elapsed time.

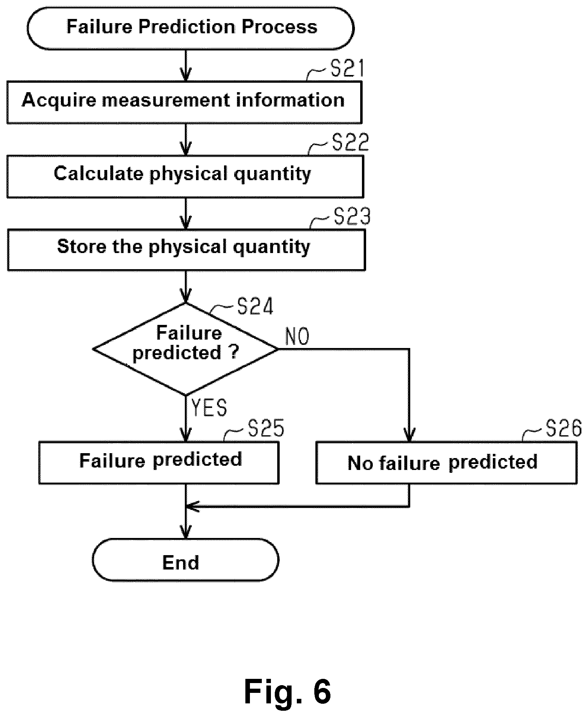

The following now describes the steps of the brake application state detection process performed by the control device 20, with reference to Fig. 6. Fig. 6 illustrates a process for the brake device 10 to detect the brake application state when the brake device 10 is activated. The brake device 10 stores the processing.

The control device 20 first acquires measurement information (step S21). The drive information acquiring unit 22 acquires the measurement information from the stress sensors 12A and 13A. Subsequently, the control device 20 calculates one or more physical quantities (step S22). Specifically, the drive information acquiring unit 22 calculates the force applied to the transmission member 12 in the brake application state from the measurement information provided by the stress sensor 12A. The drive information acquiring unit 22 also calculates the force applied to the brake shoe 14 in the brake application state from the measurement information provided by the stress sensor 13A.

Subsequently, the control device 20 store the one or more physical quantities (step S23). That is, the drive information acquiring unit 22 stores, in the storage unit 23, the displacements and the forces applied in the brake application state. Once the drive information acquiring unit 22 acquires the brake release command, the drive information acquiring unit 22 acquires the change(s) in the one or more physical quantities in the predetermined time period and stores them in the storage unit 23.

Subsequently, the control device 20 determines whether a failure is predicted, which means whether a possibility of failure is increased (step S24). The determination unit 25 determines whether a failure is predicted based on the two or more physical quantities. Further, the determination unit 25 predicts a failure due to a malfunction based on the elapsed time from when the command acquiring unit 24 acquires the brake release command to when the brake is actually released. Then, when the determination unit 25 determines that a failure is not predicted (step S24: NO), the determination unit 25 outputs "no failure predicted". That is, when the two or more physical quantities are the same and the elapsed time remains the same, the determination unit 25 determines that a failure is not predicted.

Whereas when the determination unit 25 determines that the failure is predicted (step S24: YES), the determination unit 25 outputs "a failure is predicted". That is, when the two or more physical quantities are different or the elapsed time changes, the determination unit 25 determines that a failure is predicted. Therefore, it is possible to predict a failure before insufficient brake release occurs. The control unit 21 informs that "failure is predicted" through the informing unit 26.

Advantageous effects of the fourth embodiment will be now described. The fourth embodiment produces the following advantageous effects in addition to the effects (1-1) to (1-6) achieved by the first embodiment, the effects (2-5) and (2-6) achieved by the second embodiment, and the effect (3-1) achieved by the third embodiment.

(4-1) Since the forces relating to the brake shoe 14 and the transmission unit 12 to which the driving force is transmitted change in the same manner, it is possible to predict a failure based on their physical quantities are different from each other.

(4-2) By monitoring the elapsed time from the acquisition of the brake release command by the command acquiring unit 24 to when the brake is actually released, it is possible to predict a failure due to a malfunction.

### Other Embodiments

The foregoing embodiments can be modified as described below. The above embodiments and the following modifications can be combined with each other to such an extent that they are technically consistent with each other.
• In each of the above embodiments, the applied force is measured by the strain gauge, but a limit switch may be used instead. Specifically, a deformation that occurs during the brake application and the displacement of the frictional member of the brake device are detected to determine insufficient brake release after the brake release command is issued.
•In the first and second embodiments, when the determination unit 25 determines that the brake application is maintained, the control unit 21 once drives the motor 11 in a direction opposite to the direction in which the pressing by the brake shoe 14 is released, and then drives the motor 11 in the direction in which the pressing by the brake shoe 14 is released. Alternatively, when the determination unit 25 determines that the brake application is maintained, the control unit 21 may not drive the motor 11 in the direction opposite to the direction in which the pressing by the brake shoe 14 is released.
• When the determination unit 25 determines that the brake application is maintained, the control unit 2 drives the motor 11 again in the direction in which the pressing by the brake shoe 14 is released. Alternatively, when the determination unit 25 determines that the brake application is maintained, the control unit 21 may not drive the motor 11 in the direction in which the pressing by the brake shoe 14 is released.
•In the first and second embodiments, the drive information acquisition unit 22 may acquire only one of the physical quantity change during the predetermined time period or the previous physical quantity, and the determination unit 25 may determine whether the brake application is maintained.
•In the first and second embodiment, as the physical quantity, at least one selected from the group consisting of: the force applied to the brake shoe 14 in the brake application state, the force applied to the transmission member 12 in the brake application state, the displacement of the brake shoe 14, and the displacement of the transmission member 12 is obtained. However, as the physical quantity, only one of the force applied to the brake shoe 14 in the brake application state, the force applied to the transmission member 12 in the brake application state, the displacement of the brake shoe 14, or the displacement of the transmission member 12 may be obtained.
•In the fourth embodiment, the brake device 10 may perform only the failure prediction by acquiring the physical quantity and may not perform the insufficient brake release determination process.
•In the fourth embodiment, the drive information acquiring unit 22 may acquire only one of the two or more physical quantities or the elapsed time, and the determination unit 25 may determine whether a failure is predicted.
• In the above-described embodiments, the brake devices 10, 30, and 40 are provided with the informing unit 26 to inform the wear when the wear amount of the frictional member becomes equal to or greater than a predetermined value. However, the present invention may be worked without the informing unit 26.
•In the above-described embodiments, the control unit 21 causes the frictional member to move to the position where the gap between the frictional member and the target member becomes a predetermined distance and kept it at the position after the frictional member touches the target member to apply the brake. The invention is, however, not limited to such. The control unit 21 may cause the frictional member to move to any position and kept it at the position after the frictional member touches the target member to apply the brake.
•In the first and second embodiments, the frictional member is displaced using the rotating motors 11 and 31. The frictional member may be displaced using a linearly moving actuator and a linear actuator.
• The foregoing embodiments describe a plurality of physically separate constituent parts. They may be combined into a single part, and any one of them may be divided into a plurality of physically separate constituent parts. Irrespective of whether or not the constituent parts are integrated, they are acceptable as long as they are configured to solve the problems.
• According to the foregoing embodiments, a plurality of functions are distributively provided. Some or all of the functions may be integrated. Any one of the functions may be partly or entirely segmented into a plurality of functions, which are distributively provided. Irrespective of whether or not the functions are integrated or distributed, they are acceptable as long as they are configured to solve the problems.

### LIST OF REFERENCE NUMBERS

- 2: wheel (target)
- 2A: tread surface
- 3: disc (target)
- 3A: side surface
- 5: vehicle control panel
- 10: brake device
- 11: motor
- 12: transmission member
- 12A: sensor
- 13: brake shoe retainer
- 13A: stress sensor
- 14: brake shoe (frictional member)
- 20: controller device
- 21: control unit
- 22: driving information acquiring unit
- 23: storage unit
- 24: command acquiring unit
- 25: determination unit
- 26: informing unit
- 30: brake device
- 31: motor
- 32: transmission member
- 32A: stress sensor
- 33A: left arm
- 33B: right arm
- 33C: stress sensor
- 34A: brake pad (frictional member)
- 34B: brake pad (frictional member)
- 40: brake device
- 41: air cylinder
- 42: transmission member
- 43: frictional member
- 51: pressure source
- 52: relay valve
- 53: anti-skid valve

## Claims

1. A brake control device (20) for applying a brake to a railway vehicle provided with a target member (2, 3) by pressing a frictional member (14, 34A, 34B) against the target member (2, 3), the brake control device (20) comprising:
a detection unit (22) detecting whether it is in a brake application state in which the frictional member (14, 34A, 34B) is pressed against the target member (2, 3); and **characterized in that** it comprises
an acquiring unit (24) acquiring, when the railway vehicle is stopped, a brake release command for releasing the pressing of the target member (2, 3) by the frictional member (14, 34A, 34B); and
a determination unit (25) determining, when the railway vehicle is stopped, whether the brake application state is maintained by using a detection result provided by the detection unit (22) after the acquiring unit (24) has acquired the brake release command.

2. The brake control device (20) of claim 1, wherein the detection unit (22) determines whether the brake application state is maintained based on a physical quantity, the physical quantity being at least one selected from the group consisting of: a force applied to the frictional member (14, 34A, 34B) in the brake application state, a force applied to a transmission member (12) in the brake application state, a displacement of the frictional member (14, 34A, 34B), and a displacement of the transmission member (12).

3. The brake control device (20) of claim 2, wherein the determination unit determines whether the brake application state is maintained based on a change in the physical quantity during a predetermined time period, the predetermined time period being a length of time from when the brake release command is acquired to when the brake is actually released in a normal state.

4. The brake control device (20) of claim 2 or 3, wherein the determination unit (25) determines whether the brake application state is maintained by comparing the physical quantity with a previous physical quantity.

5. The brake control device (20) of any one of claims 2 to 4, further comprising:
a control unit (21) controlling driving of an electric actuator (11, 31),
wherein the frictional member (14, 34A, 34B) is driven by the electric actuator via the transmission member (12),
wherein when the determination unit (21) determines that the brake application state is maintained, the control unit drives the electric actuator again in a direction in which the pressing by the frictional member (14, 34A, 34B) is released.

6. The brake control device (20) of claim 5, wherein when the determination unit (25) determines that the brake application state is maintained, the control unit once drives the electric actuator in a direction opposite to the direction in which the pressing by the frictional member (14, 34A, 34B) is released, and then drives the electric actuator in the direction in which the pressing by the frictional member (14, 34A, 34B) is released.

7. The brake control device (20) of any one of claims 1 to 4, further comprising:
a control unit (21) controlling an anti-skid valve (53),
wherein the frictional member (14, 34A, 34B) is driven by a pressure supplied from a pressure source (51) via a relay valve (52) and the anti-skid valve (53),
wherein the control unit (21) drives the frictional member (14, 34A, 34B) in a direction in which the pressing by the frictional member (14, 34A, 34B) is released by exhausting through the anti-skid valve (53) when the determination unit (25) determines that the brake application state is maintained.

8. The brake control device (20) of claim 2, wherein a plurality of the detection units (22) are provided on at least one of the frictional member (14, 34A, 34B) or the transmission member (12), and each of the plurality of detection units (22) detects a force applied to the at least one of the frictional material or the transmission member (12) in the brake application state,
wherein the determination unit (25) predicts a failure from a difference between physical quantities detected by the plurality of detection units (22).

9. The brake control device (20) of any one of claims 1 to 8, wherein the determination unit (25) predicts a failure due to a malfunction based on an elapsed time from when the command acquiring unit (24) acquires the brake release command to when the brake is actually released.

10. The brake control device (20) of any one of claims 1 to 9, wherein the target member (2, 3) is a wheel (2) of the railway vehicle or a rotating body (3) rotatable integrally with the wheel (2).

11. A brake control method for applying a brake to a railway vehicle provided with a target member (2, 3) by pressing a frictional member (14, 34A, 34B) against the target member (2, 3), the method comprising:
a detection step of detecting whether it is in a brake application state in which the frictional member (14, 34A, 34B) is pressed against the target member (2, 3);
an acquiring step of acquiring, when the railway vehicle is stopped, a brake release command for releasing the pressing of the target member (2, 3) by the frictional member (14, 34A, 34B); and
a determination step of determining, when the railway vehicle is stopped, whether the brake application state is maintained by using a detection result provided by the detection unit (22) after the acquiring unit (24) has acquired the brake release command.

12. A brake control program for applying a brake to a railway vehicle provided with a target member (2, 3) by pressing a frictional member (14, 34A, 34B) against the target member (2, 3), the program causing a computer to perform:
a detection step of detecting whether it is in a brake application state in which the frictional member (14, 34A, 34B) is pressed against the target member (2, 3);
an acquiring step of acquiring, when the railway vehicle is stopped, a brake release command for releasing the pressing of the target member (2, 3) by the frictional member (14, 34A, 34B); and
a determination step of determining, when the railway vehicle is stopped, whether the brake application state is maintained by using a detection result provided by the detection unit (22) after the acquiring unit (24) has acquired the brake release command.

## Patentansprüche

1. Eine Bremssteuervorrichtung (20) zum Anlegen einer Bremse an einem Schienenfahrzeug, das mit einem Zielelement (2, 3) versehen ist, indem ein Reibelement (14, 34A, 34B) gegen das Zielelement (2, 3) gedrückt wird, wobei die Bremssteuervorrichtung (20) umfasst:
eine Detektionseinheit (22), die detektiert, ob sie sich in einem Bremsanlegezustand befindet, in dem das Reibelement (14, 34A, 34B) gegen das Zielelement (2, 3) gedrückt wird;
und **dadurch gekennzeichnet, dass** sie umfasst
eine Erfassungseinheit (24), die, wenn das Schienenfahrzeug gestoppt wird, einen Bremslösebefehl zum Lösen des Drückens des Zielelements (2, 3) durch das Reibelement (14, 34A, 34B) erfasst; und
eine Bestimmungseinheit (25), die, wenn das Schienenfahrzeug gestoppt wird, bestimmt, ob der Bremsanlegezustand aufrechterhalten wird, indem ein von der Detektionseinheit (22) vorgesehenes Detektionsergebnis, nachdem die Erfassungseinheit (24) den Bremslösebebefehl erfasst hat, verwendet wird.

2. Die Bremssteuervorrichtung (20) nach Anspruch 1, wobei die Detektionseinheit (22) auf der Grundlage einer physikalischen Größe bestimmt, ob der Bremsanlegezustand aufrechterhalten wird, wobei die physikalische Größe mindestens eine Größe ist, die aus der Gruppe ausgewählt ist, die aus Folgendem besteht: einer auf das Reibelement (14, 34A, 34B) im Bremsanlegezustand ausgeübten Kraft, einer auf ein Übertragungselement (12) im Bremsanlegezustand ausgeübten Kraft, einer Verschiebung des Reibelements (14, 34A, 34B) und einer Verschiebung des Übertragungselements (12).

3. Die Bremssteuervorrichtung (20) nach Anspruch 2, wobei die Bestimmungseinheit auf der Grundlage einer Änderung der physikalischen Größe während einer vorbestimmten Zeitperiode bestimmt, ob der Bremsanlegezustand aufrechterhalten wird, wobei die vorbestimmte Zeitperiode eine Zeitlänge von dem Zeitpunkt, zu dem der Bremslösebefehl erfasst wird, bis zu dem Zeitpunkt ist, zu dem die Bremse in einem normalen Zustand tatsächlich gelöst wird.

4. Die Bremssteuervorrichtung (20) nach Anspruch 2 oder 3, wobei die Bestimmungseinheit (25) bestimmt, ob der Bremsanlegezustand aufrechterhalten wird, indem die physikalische Größe mit einer vorherigen physikalischen Größe verglichen wird.

5. Die Bremssteuervorrichtung (20) nach irgendeinem der Ansprüche 2 bis 4, ferner umfassend:
eine Steuereinheit (21), die den Antrieb eines elektrischen Aktuators (11, 31) steuert,
wobei das Reibelement (14, 34A, 34B) durch den elektrischen Aktuator über das Übertragungselement (12) angetrieben wird,
wobei, wenn die Bestimmungseinheit (21) bestimmt, dass der Bremsanlegezustand aufrechterhalten wird, die Steuereinheit den elektrischen Aktuator erneut in einer Richtung antreibt, in der das Drücken durch das Reibelement (14, 34A, 34B) gelöst wird.

6. Die Bremssteuervorrichtung (20) nach Anspruch 5, wobei, wenn die Bestimmungseinheit (25) bestimmt, dass der Bremsanlegezustand aufrechterhalten wird, die Steuereinheit den elektrischen Aktuator einmal in einer Richtung antreibt, die der Richtung entgegengesetzt ist, in der das Drücken durch das Reibelement (14, 34A, 34B) gelöst wird, und dann den elektrischen Aktuator in die Richtung antreibt, in der das Drücken durch das Reibelement (14, 34A, 34B) gelöst wird.

7. Die Bremssteuervorrichtung (20) nach irgendeinem der Ansprüche 1 bis 4, ferner umfassend:
eine Steuereinheit (21), die ein Antiblockierventil (53) steuert,
wobei das Reibelement (14, 34A, 34B) durch einen Druck angetrieben wird, der von einer Druckquelle (51) über ein Relaisventil (52) und das Antiblockierventil (53) zugeführt wird,
wobei die Steuereinheit (21) das Reibelement (14, 34A, 34B) in eine Richtung antreibt, in der das Drücken durch das Reibelement (14, 34A, 34B) gelöst wird, indem durch das Antiblockierventil (53) ausgestoßen wird, wenn die Bestimmungseinheit (25) bestimmt, dass der Bremsanlegezustand aufrechterhalten wird.

8. Die Bremssteuervorrichtung (20) nach Anspruch 2, wobei eine Vielzahl von den Detektionseinheiten (22) an mindestens einem von dem Reibelement (14, 34A, 34B) oder dem Übertragungselement (12) vorgesehen sind, und jede der Vielzahl von Detektionseinheiten (22) eine Kraft detektiert, die auf mindest eines von dem Reibmaterial oder dem Übertragungselement (12) im Bremsanlegezustand ausgeübt wird,
wobei die Bestimmungseinheit (25) einen Fehler anhand einer Differenz zwischen physikalischen Größen vorhersagt, die von der Vielzahl von Detektionseinheiten (22) erfasst werden.

9. Die Bremssteuervorrichtung (20) nach irgendeinem der Ansprüche 1 bis 8, wobei die Bestimmungseinheit (25) einen Fehler aufgrund einer Fehlfunktion auf der Grundlage einer verstrichenen Zeit von dem Zeitpunkt, zu dem die Befehlserfassungseinheit (24) den Bremslösebefehl erfasst, bis zu dem Zeitpunkt, zu dem die Bremse tatsächlich gelöst wird, vorhersagt.

10. Die Bremssteuervorrichtung (20) nach irgendeinem der Ansprüche 1 bis 9, wobei das Zielelement (2, 3) ein Rad (2) des Schienenfahrzeugs oder ein drehbarer Körper (3) ist, der integral mit dem Rad (2) drehbar ist.

11. Ein Bremssteuerverfahren zum Anlegen einer Bremse an ein Schienenfahrzeug, das mit einem Zielelement (2, 3) versehen ist, durch Drücken eines Reibelements (14, 34A, 34B) gegen das Zielelement (2, 3), wobei das Verfahren umfasst:
einen Detektionsschritt zum Detektieren, ob sie sich in einem Bremsanlegezustand befindet, in dem das Reibelement (14, 34A, 34B) gegen das Zielelement (2, 3) gedrückt wird;
einen Erfassungsschritt zum Erfassen eines Bremslösebefehls zum Lösen des Drückens des Zielelements (2, 3) durch das Reibelement (14, 34A, 34B), wenn das Schienenfahrzeug gestoppt wird; und
einen Bestimmungsschritt zum Bestimmen, wenn das Schienenfahrzeug gestoppt wird, ob der Bremsanlegezustand aufrechterhalten wird, indem ein von der Detektionseinheit (22) vorgesehenes Detektionsergebnis, nachdem die Erfassungseinheit (24) den Bremslösebefehl erfasst hat, verwendet wird.

12. Ein Bremssteuerprogramm zum Anlegen einer Bremse an ein Schienenfahrzeug, das mit einem Zielelement (2, 3) versehen ist, durch Drücken eines Reibelements (14, 34A, 34B) gegen das Zielelement (2, 3), wobei das Programm einen Computer veranlasst, Folgendes auszuführen:
einen Detektionsschritt zum Detektieren, ob sie sich in einem Bremsanlegezustand befindet, in dem das Reibelement (14, 34A, 34B) gegen das Zielelement (2, 3) gedrückt wird;
einen Erfassungsschritt zum Erfassen eines Bremslösebefehls zum Lösen des Drückens des Zielelements (2, 3) durch das Reibelement (14, 34A, 34B), wenn das Schienenfahrzeug gestoppt wird; und
einen Bestimmungsschritt zum Bestimmen, wenn das Schienenfahrzeug gestoppt wird, ob der Bremsanlegezustand aufrechterhalten wird, indem ein von der Detektionseinheit (22) vorgesehenes Detektionsergebnis, nachdem die Erfassungseinheit (24) den Bremslösebefehl erfasst hat, verwendet wird.

## Revendications

1. Dispositif de commande de frein (20) pour appliquer un frein à un véhicule ferroviaire prévu avec un élément cible (2, 3) en pressant un élément de friction (14, 34A, 34B) contre l'élément cible (2, 3),
le dispositif de commande de frein (20) comprenant :
une unité de détection (22) détectant s'il se trouve dans un état d'application de frein dans lequel l'élément de friction (14, 34A, 34B) est pressé contre l'élément cible (2, 3) ;
et **caractérisé en ce qu'**il comprend
une unité d'acquisition (24) acquérant, lorsque le véhicule ferroviaire est arrêté, une commande de desserrage de frein pour relâcher la pression de l'élément cible (2, 3) par l'élément de friction (14, 34A, 34B) ; et
une unité de détermination (25) déterminant, lorsque le véhicule ferroviaire est arrêté, si l'état d'application de frein est maintenu en utilisant un résultat de détection prévu par l'unité de détection (22) après que l'unité d'acquisition (24) a acquis la commande de desserrage de frein.

2. Dispositif de commande de frein (20) selon la revendication 1, dans lequel l'unité de détection (22) détermine si l'état d'application de frein est maintenu sur la base d'une quantité physique, la quantité physique étant au moins l'une sélectionnée dans le groupe constitué de : une force appliquée à l'élément de friction (14, 34a, 34b) dans l'état d'application de frein, une force appliquée à un élément de transmission (12) dans l'état d'application de frein, un déplacement de l'élément de friction (14, 34a, 34b), et un déplacement de l'élément de transmission (12).

3. Dispositif de commande de frein (20) selon la revendication 2, dans lequel l'unité de détermination détermine si l'état d'application de frein est maintenu sur la base d'un changement de la quantité physique pendant une période de temps prédéterminée, la période de temps prédéterminée étant une longueur de temps entre le moment où la commande de desserrage de frein est acquise et le moment où le frein est effectivement desserré dans un état normal.

4. Dispositif de commande de frein (20) selon la revendication 2 ou 3, dans lequel l'unité de détermination (25) détermine si l'état d'application de frein est maintenu en comparant la quantité physique avec une quantité physique précédente.

5. Dispositif de commande de frein (20) selon l'une quelconque des revendications 2 à 4, comprenant en outre :
une unité de commande (21) commandant l'entraînement d'un actionneur électrique (11, 31),
dans lequel l'élément de friction (14, 34A, 34B) est entraîné par l'actionneur électrique *via* l'élément de transmission (12),
dans lequel, lorsque l'unité de détermination (21) détermine que l'état d'application de frein est maintenu, l'unité de commande entraîne à nouveau l'actionneur électrique dans une direction dans laquelle la pression exercée par l'élément de friction (14, 34A, 34B) est relâchée.

6. Dispositif de commande de frein (20) selon la revendication 5, dans lequel, lorsque l'unité de détermination (25) détermine que l'état d'application de frein est maintenu, l'unité de commande entraîne une fois l'actionneur électrique dans une direction opposée à la direction dans laquelle la pression exercée par l'élément de friction (14, 34A, 34B) est relâchée, puis entraîne l'actionneur électrique dans la direction dans laquelle la pression exercée par l'élément de friction (14, 34A, 34B) est relâchée.

7. Dispositif de commande de frein (20) selon l'une quelconque des revendications 1 à 4, comprenant en outre :
une unité de commande (21) commandant une vanne antidérapante (53), dans laquelle l'élément de friction (14, 34A, 34B) est entraîné par une pression fournie par une source de pression (51) *via* une vanne relais (52) et la vanne antidérapante (53),
dans lequel l'unité de commande (21) commande l'élément de friction (14, 34A, 34B) dans une direction dans laquelle la pression exercée par l'élément de friction (14, 34A, 34B) est relâchée par l'échappement à travers la vanne antidérapante (53) lorsque l'unité de détermination (25) détermine que l'état d'application de frein est maintenu.

8. Dispositif de commande de frein (20) selon la revendication 2, dans lequel une pluralité des unités de détection (22) sont prévues sur au moins l'un de l'élément de friction (14, 34a, 34b) ou l'élément de transmission (12), et chacune de la pluralité des unités de détection (22) détecte une force appliquée à l'au moins l'un du matériau de friction ou l'élément de transmission (12) dans l'état d'application de frein,
dans lequel l'unité de détermination (25) prédit une défaillance à partir d'une différence entre les quantités physiques détectées par la pluralité d'unités de détection (22).

9. Dispositif de commande de frein (20) selon l'une quelconque des revendications 1 à 8, dans lequel l'unité de détermination (25) prédit une défaillance due à un dysfonctionnement sur la base d'un temps écoulé entre le moment où l'unité d'acquisition (24) de commandes acquiert la commande de desserrage de frein et le moment où le frein est effectivement desserré.

10. Dispositif de commande de frein (20) selon l'une quelconque des revendications 1 à 9, dans lequel l'élément cible (2, 3) est une roue (2) du véhicule ferroviaire ou un corps rotatif (3) pouvant tourner d'un seul tenant avec la roue (2).

11. Procédé de commande de frein pour appliquer un frein à un véhicule ferroviaire prévu avec un élément cible (2, 3) en pressant un élément de friction (14, 34A, 34B) contre l'élément cible (2, 3), le procédé comprenant :
une étape de détection consistant à détecter s'il se trouve dans un état de frein dans lequel l'élément de friction (14, 34A, 34B) est pressé contre l'élément cible (2, 3) ;
une étape d'acquisition consistant à acquérir, lorsque le véhicule ferroviaire est arrêté, une commande de desserrage de frein pour relâcher la pression de l'élément cible (2, 3) par l'élément de friction (14, 34A, 34B) ; et
une étape de détermination déterminant, lorsque le véhicule ferroviaire est arrêté, si l'état d'application de frein est maintenu en utilisant un résultat de détection prévu par l'unité de détection (22) après que l'unité d'acquisition (24) a acquis la commande de desserrage de frein.

12. Programme de commande de frein pour appliquer un frein à un véhicule ferroviaire prévu avec un élément cible (2, 3) en pressant un élément de friction (14, 34A, 34B) contre l'élément cible (2, 3), le programme amenant un ordinateur à réaliser :
une étape de détection consistant à détecter s'il se trouve dans un état d'application de frein dans lequel l'élément de friction (14, 34A, 34B) est pressé contre l'élément cible (2, 3) ;
une étape d'acquisition consistant à acquérir, lorsque le véhicule ferroviaire est arrêté, une commande de desserrage de frein pour relâcher la pression de l'élément cible (2, 3) par l'élément de friction (14, 34A, 34B) ; et
une étape de détermination déterminant, lorsque le véhicule ferroviaire est arrêté, si l'état d'application de frein est maintenu en utilisant un résultat de détection prévu par l'unité de détection (22) après que l'unité d'acquisition (24) a acquis la commande de desserrage de frein.
